# EUROPÄISCHE PATENTANMELDUNG

(11) **EP 2 639 149 A1**
(43) Veröffentlichungstag der Anmeldung: **18.09.2013**
(21) Anmeldenummer: 13158795.8
(22) Anmeldetag: 12.03.2013
(51) Int. Cl.: B62K 25/04, B62K 19/36

(54) **Fahrradrahmen-Sattelrohr**

(30) Priorität: 15.03.2012 DE 202012002603 U
(71) Anmelder: Canyon Bicycles GmbH, 56073 Koblenz (DE)
(72) Erfinder: Kaiser, Michael, 56073 Koblenz (DE)
(74) Vertreter: von Kreisler Selting Werner

(57) **Zusammenfassung**

Ein Fahrradrahmen-Sattelrohr, das insbesondere für einen Rennradrahmen geeignet ist, weist einen sattelseitigen Endbereich (10) auf. Mit dem sattelseitigen Endbereich (10) sind Verbindungselemente (16,18) verbunden, um über Gelenkelemente (24) das Oberrohr (20) sowie Sattelstreben (22) gelenkig mit dem Sattelrohr zu verbinden. Ein tretlagerseitiger Endbereich (12) ist mit einem Tretlagergehäuse (32) verbunden. Zwischen den beiden Endbereichen (10, 12) ist ein Zwischenelement (14) vorgesehen. Dieses weist zur Ausbildung eines Dämpfungselements zwei elastisch verformbare Verbindungselemente (38) auf, die vorzugsweise über Gelenkelemente (42) mit dem tretlagerseitigen Endbereich (12) verbunden sind.

## Beschreibung

Die Erfindung betrifft ein Fahrradrahmen-Sattelrohr, insbesondere ein Sattelrohr für Rennradrahmen.

Fahrradrahmen weisen ein Sattelrohr auf, das am sattelseitigen Endbereich mit einem Oberrohr sowie mit den Sattelstreben verbunden ist. Üblicherweise handelt es sich hierbei um eine starre Verbindung, wobei das Oberrohr ggf. auch etwas tiefer, d.h. in Richtung des Tretlagers verschoben, mit dem Sattelrohr verbunden sein kann. Die Sattelstreben müssen entweder vor der Verbindung mit dem Sattelrohr zusammengeführt und sodann gemeinsam mit dem Sattelrohr insbesondere starr verbunden werden oder die beiden Sattelstreben müssen gesondert mit dem Sattelrohr starr verbunden werden. Die Sattelstreben führen üblicherweise vom Sattelrohr nach hinten und sind mit den Kettenstreben im Bereich der Hinternarbenaufnahme verbunden. Der untere Endbereich des Sattelrohrs ist starr mit dem Tretlager verbunden.

Zur Erhöhung des Komforts sind unterschiedliche Dämpfungsmechanismen bei Fahrrädern bekannt. Insbesondere sind gefederte Fahrradgabeln sowie gefederte Hinterradschwingen bekannt. Derartige Dämpfungselemente werden insbesondere bei Mountain- und Treckingfahrrädern eingesetzt. Bei Rennrädern werden derartige Dämpfungssysteme üblicherweise nicht eingesetzt, da sie zu schwer sind. Ferner weisen derartige Dämpfungssysteme den Nachteil auf, dass sie teuer und wartungsintensiv sind. Bei ungefederten Fahrradrahmen, insbesondere Rennradrahmen besteht somit der Nachteil, dass beim Überfahren von Fahrbahn-Unebenheiten Stöße in den Rahmen eingeleitet werden, die unmittelbar auf den Fahrer übertragen werden. Hierbei kann insbesondere das Übertragen von Stößen über den Sattel zu Rückenproblemen führen.

Aufgabe der Erfindung ist es, ein Fahrradrahmen-Sattelrohr zu schaffen, mit dem der Fahrkomfort erhöht werden kann.

Die Lösung der Aufgabe erfolgt erfindungsgemäß durch ein Fahrradrahmen-Sattelrohr nach Anspruch 1.

Das erfindungsgemäße Fahrradrahmen-Sattelrohr, das insbesondere für Rennradrahmen entwickelt wurde, weist an einem sattelseitigen Endbereich Verbindungselemente auf. Mithilfe der insbesondere zwei Verbindungselemente ist ein Verbinden des Sattelrohrs mit dem Oberrohrs sowie mit den Sattelstreben möglich. Ferner ist das Sattelrohr mit seinem gegenüberliegenden tretlagerseitigen Endbereich mit einem Tretlagergehäuse verbindbar. Die beiden Endbereiche sind über ein Zwischenelement miteinander verbunden. Erfindungsgemäß weist das Zwischenelement ein Dämpfungselement auf. Das Dämpfungselement kann hierbei in das Zwischenelement integriert werden. Durch das Dämpfungselement ist es möglich auftretende Stöße beim Überfahren von Fahrbahn-Unebenheiten abzufedern bzw. zu dämpfen. Bei dem Dämpfungselement kann es sich um einen in Längsrichtung des Sattelrohrs wirkenden Dämpfer handeln. Vorzugsweise handelt es sich jedoch um ein elastisch verformbares Element, sodass eine Verbiegung bzw. Verformung des Sattelrohrs im Bereich des Zwischenelements möglich ist. Diese Verbiegung oder Verformung erfolgt vorzugsweise in Rahmenlängsrichtung.

Bei einer besonders bevorzugten Ausführungsform ist das Verbindungselement, mit dem das Oberrohr verbindbar ist, d.h. das erste Verbindungselement, derart ausgestaltet, dass eine gelenkige Verbindung zwischen Oberrohr und sattelseitigen Endbereich des Sattelrohrs möglich ist. Hierzu kann das erste Verbindungselement entsprechend einer Lasche ausgebildet, die in Rahmenlängsrichtung weist. Mit der Lasche können bspw. zapfenförmige Ansätze des Oberrohrs über eine im montierten Zustand horizontal verlaufende Gelenkachse verbunden werden. Vorzugsweise ist das Gelenk somit derart ausgebildet sein, dass das Oberrohr um eine horizontale Achse gegenüber dem Sattelrohr zumindest in einem geringen Winkelbereich verschwenkbar ist.

In einer bevorzugten Weiterbildung der Erfindung sind die Sattelstreben gesondert voneinander oder nachdem sie zusammengeführt wurden, gemeinsam ebenfalls gelenkig mit dem sattelseitigen Endbereich des Sattelrohrs verbindbar, wobei das Sattelrohr hierzu ein zweites Verbindungselement aufweist. Dies ist vorzugsweise entsprechend des ersten Verbindungselementes ausgebildet.

Besonders bevorzugt ist es, dass sowohl das erste als auch das zweite Verbindungselement eine gelenkige Verbindung mit dem Oberrohr bzw. mit den Sattelstreben ermöglicht. Aufgrund dieser beiden gelenkigen Verbindungen ist ein Verbiegen bzw. elastisches Verformen des Sattelrohrs, insbesondere in Rahmenlängsrichtung möglich. Hierdurch können die Dämpfungseigenschaften des Fahrradrahmens deutlich verbessert werden.

Bei einer besonders bevorzugten Ausführungsform der Erfindung weist das Zwischenelement mindestens zwei Verbindungselemente auf, von denen zumindest eines elastisch verformbar ist.

In bevorzugter Ausführungsform der Dämpfungseigenschaften sind die Verbindungselemente, die zumindest einen Teil des jeweiligen Zwischenelements ausbilden, unabhängig voneinander verformbar. Dies ist insbesondere dadurch erzielt, dass die Verbindungselemente in einem Abstand zueinander angeordnet bzw. zwischen den Verbindungselementen ein Schlitz vorgesehen ist. Die Verbindungselemente sind somit gesondert mit den beiden Endbereichen des Sattelrohrs verbunden, sofern die gesamten Zwischenelemente als Verbindungselemente ausgebildet sind. Sofern nur ein Teil der Zwischenelemente als Verbindungselemente ausgebildet ist, erfolgt ein gesondertes Verbinden der Verbindungselemente mit einem Zwischenteil der Zwischenelemente, das sodann mit dem jeweiligen Endbereich.

Ein zwischen den Verbindungselementen vorgesehener Schlitz kann durch ein Elastomermaterial oder einen Kunststoff gefüllt sein. Je nach Ausgestaltungen des Füllmaterials können hierdurch die Dämpfungseigenschaften des Sattelrohrs variiert werden. Desweiteren hat das Füllen des Schlitzes den Vorteil, dass das Eindringen von Schmutz vermieden ist.

Bei einer besonders bevorzugten Weiterbildung des Zwischenelements ist zumindest eines, vorzugsweise alle Verbindungselemente mit dem tretlagerseitigen Endbereich schwenkbar verbunden. Hierbei ist die Schwenkbarkeit insbesondere durch Gelenkelemente realisiert. Durch Vorsehen derartiger Gelenkelemente erfolgt die elastische Verformung im Wesentlichen durch Verformen des Verbindungselements. Bevorzugt ist es hierbei, dass je Verbindungselement ein Gelenkelement vorgesehen ist. Dementsprechend sind bei dieser besonders bevorzugten Ausführungsform die Verbindungselemente mit dem sattelseitigen Endbereich starr verbunden. Wenngleich auch im Bereich dieser verhältnismäßig starren Verbindung eine Verformung auftreten kann, ist die Verbindung vorzugsweise derart ausgestaltet, dass die Verformung im Wesentlichen durch die Verbindungselemente erfolgt. Besonders bevorzugst ist es, dass der sattelseitige Endbereich mit den Verbindungselementen einstückig ausgebildet ist.

Ferner betrifft die Erfindung einen Fahrradrahmen, insbesondere einen Rennradrahmen mit einem Oberrohr und einem Unterrohr, wobei das Unterrohr über ein Gabelrohr mit dem Oberrohr verbunden ist. Das Gabelrohr dient zur Aufnahme eines Gabelschaftes. Ferner weist der Fahrradrahmen Sattelstreben und Kettenstreben auf. Die Sattelstreben sind im Bereich der Ausfallenden der Kettenstreben mit diesen verbunden. Ferner sind die Sattelstreben mit dem Tretlagergehäuse oder dem tretlagerseitigen Endbereich des Sattelrohrs insbesondere steif verbunden. Das Unterrohr ist ebenfalls insbesondere steif mit dem Tretlagergehäuse oder dem tretlagerseitigen Endbereich des Sattelrohrs verbunden. Ferner weist der erfindungsgemäße Fahrradrahmen ein Sattelrohr auf, das wie vorstehend beschrieben ausgebildet ist.

Nachfolgend wird die Erfindung anhand einer bevorzugten Ausführungsform unter Bezugnahme auf die anliegenden Zeichnungen näher erläutert.

Es zeigen:
- Figur 1:: eine schematische Seitenansicht eines Fahrradrahmen-Sattelrohrs zusammen mit angrenzenden Rahmen-Bauteilen,
- Figur 2: eine schematische Draufsicht in Richtung des Pfeils II in Fig. 1,
- Figur 3: eine schematische Schnittansicht entlang der Linie III-III in Fig. 1 und
- Figur 4: eine schematische Draufsicht in Richtung des Pfeils IV in Fig. 1.

Das Fahrradrahmen-Sattelrohr weist einen sattelseitigen Endbereich 10 sowie einen tretlagerseitigen Endbereich 12 auf. Die beiden Endbereiche 10,12 sind über ein Zwischenelement 14 miteinander verbunden. Der sattelseitige Endbereich weist zwei Verbindungselemente 16,18 auf. Beide Verbindungselemente 16,18 weisen in Rahmenlängsrichtung, wobei das erste Verbindungselement 16 in Fahrtrichtung und das zweite Verbindungselement 18 entgegen der Fahrtrichtung weist. Das erste Verbindungselement 16 ist mit einem Oberrohr 20 verbunden. Das zweite Verbindungselement 18 ist mit Sattelstreben 22 verbunden, wobei im dargestellten Ausführungsbeispiel ein Rohrelement 22 dargestellt ist, in dem die beiden Sattelstreben zusammengeführt sind. Gegebenenfalls könnten die beiden Sattelstreben auch gesondert mit dem Verbindungselement 18 verbunden sein.

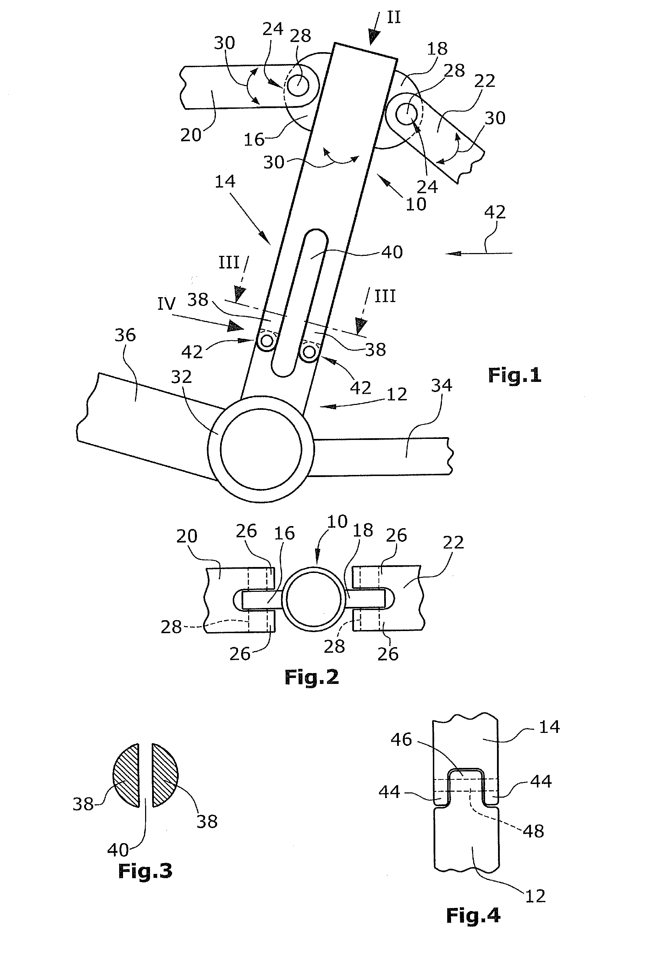

Die Verbindung zwischen den Verbindungselementen 16,18 und dem Oberrohr 20 bzw. den Sattelstreben 22 erfolgt jeweils über ein Gelenkelement 24. Zur Ausbildung des Gelenkelements 24 weist das Oberrohr zwei laschenförmige Ansätze 26 (Fig. 2) auf. Diese sind seitlich neben dem ersten Verbindungselement 16 angeordnet. Über eine Gelenkachse 28 erfolgt ein gelenkiges Verbinden zwischen dem Oberrohr 20 und dem Verbindungselement 16, das fest mit dem sattelseitigen Endbereich 10 des Sattelrohrs verbunden ist.

Ferner ist im dargestellten Ausführungsbeispiel das rohrförmige Teil 22 der Sattelstreben ebenfalls mit zwei laschenförmigen Ansätzen 26 versehen, die dann entsprechend seitlich neben dem zweiten Verbindungselement 18 angeordnet und über eine Gelenkachse 28 miteinander gelenkig verbunden sind. Hierdurch ist ein relatives Verschwenken zwischen dem sattelseitigen Endbereich 10, dem Oberrohr 20 und den Sattelstreben 22, wie durch Pfeile 30 dargestellt, möglich. Im tretlagerseitigen Endbereich 12 ist das Sattelrohr insbesondere fest mit einem Tretlagergehäuse 32 verbunden. Mit dem Tretlagergehäuse 32 oder auch dem tretlagerseitigem Endbereich 12 sind Kettenstreben 34 sowie ein Unterrohr 36 ebenfalls insbesondere fest verbunden.

In dem sattelseitigen Endbereich (10) des Sattelrohrs wird in Figur 1 (von oben) das den Sattel tragende Sattelstützrohr eingesteckt und üblicherweise klemmend befestigt.

Das Zwischenelement 14 dient erfindungsgemäß zur Dämpfung von Stößen und dergleichen. Hierzu weist das Zwischenelement 14 im dargestellten Ausführungsbeispiel zwei Verbindungselemente 38 auf. Die Verbindungselemente 38, die vorzugsweise identisch aber spiegelsymmetrisch ausgebildet sind, sind in einem Abstand zueinander angeordnet, sodass ein Schlitz 40 zwischen den beiden Verbindungselementen ausgebildet ist. Der Schlitz 40, der bspw. mit einer Elastomermasse gefüllt sein kann, verläuft quer zur Fahrt- bzw. Rahmenlängsrichtung 42. Die beiden elastisch verformbaren Verbindungselemente 38 sind mit dem sattelseitigen Endbereich 10 des Sattelrohrs fest verbunden und im dargestellten Ausführungsbeispiel einstückig ausgebildet, wobei sowohl das Zwischenelement 14 als auch der sattelseitige Endbereich des Sattelrohrs in bevorzugter Ausführungsform aus Faserverbundmaterial, insbesondere kohlenstofffaserverstärktem Kunststoff hergestellt ist.

Mit dem tretlagerseitigen Endbereich 12 sind die beiden Verbindungselemente 38 über Gelenkelemente 42 verbunden. Die beiden Gelenkelemente 42 sind bspw. derart ausgebildet, dass die Verbindungselemente 38 jeweils zwei Laschen 44 aufweisen. Zwischen den beiden Laschen 44 ist ein Ansatz 46 des tretlagerseitigen Endbereichs 12 angeordnet. Die gelenkige Verbindung der Laschen 44 mit der Lasche 46 erfolgt über eine Gelenkachse 48.

Bei auftretenden Stößen kann somit aufgrund des Vorsehens der Gelenkelemente 42 sowie auch der Gelenkelemente 24 ein Verformen der Verbindungselemente 38 in oder gegen die Rahmenlängsrichtung 42 erfolgen. Hierdurch ist eine Eigenflexibilität des Sattelrohrs realisiert, die gute Dämpfungswirkungen hat.

## Patentansprüche

1. Fahrradrahmen-Sattelrohr insbesondere für einen Rennradrahmen, mit
an einem sattelseitigen Endbereich (10) vorgesehenen Verbindungselementen (16,18) zum Verbinden mit einem Oberrohr (20) und Sattelstreben (22),
einem mit einem Tretlagergehäuse (32) verbindbaren tretlagerseitigen Endbereich (12) und
einem zwischen den beiden Endbereichen (10,12) vorgesehenen Zwischenelement (14),
**dadurch gekennzeichnet, dass**
das Zwischenelement (14) ein Dämpfungselement aufweist.

2. Fahrradrahmen-Sattelrohr nach Anspruch 1, **dadurch gekennzeichnet, dass** das Oberrohr (20) über ein erstes Verbindungselement (16) gelenkig mit dem sattelseitigen Endbereich (10) verbunden ist.

3. Fahrradrahmen-Sattelrohr nach einem der Ansprüche 1 oder 2, **dadurch gekennzeichnet, dass** die Sattelstreben (12) über ein zweites Verbindungselement (18) gelenkig mit dem sattelseitigen Endbereich (10) verbunden sind.

4. Fahrradrahmen-Sattelrohr nach einem der Ansprüche 1 bis 3, **dadurch gekennzeichnet, dass** das Zwischenelement (14) mindestens zwei Verbindungselemente (38) aufweist, von denen mindestens eines elastisch verformbar ist.

5. Fahrradrahmen-Sattelrohr nach einem der Ansprüche 1 bis 4, **dadurch gekennzeichnet, dass** alle Verbindungselemente insbesondere unabhängig voneinander elastisch verformbar sind.

6. Fahrradrahmen-Sattelrohr nach einem der Ansprüche 1 bis 5, **dadurch gekennzeichnet, dass** zwischen den Verbindungselementen (38) ein Schlitz (40) vorgesehen ist, der vorzugsweise mit Elastomermaterial gefüllt ist.

7. Fahrradrahmen-Sattelrohr nach einem der Ansprüche 1 bis 6, **dadurch gekennzeichnet, dass** zumindest eines der Verbindungselemente (38), vorzugsweise alle Verbindungselemente (38), mit dem sattelseitigen Endbereich (10) oder dem tretlagerseitigen Endbereich (12), insbesondere über ein Gelenkelement (42) schwenkbar verbunden sind.

8. Fahrradrahmen-Sattelrohr nach Anspruch 7, **dadurch gekennzeichnet, dass** alle Verbindungselemente (38) mit dem tretlagerseitigem Endbereich (12) jeweils über ein Gelenkelement (42) verbunden sind.

9. Fahrradrahmen-Sattelrohr nach einem der Ansprüche 1 bis 8, **dadurch gekennzeichnet, dass** alle Verbindungselemente (38) mit dem sattelseitigen Endbereich (10) starr verbunden, insbesondere einstückig ausgebildet sind.

10. Fahrradrahmen, insbesondere Rennradrahmen, mit
einem Oberrohr (20), das über ein Gabelrohr mit einem Unterrohr (36) verbunden ist,
Sattelstreben (22), die mit Kettenstreben (34) verbunden sind und
einem Fahrradrahmen-Sattelrohr nach einem der Ansprüche 1 bis 9.
